# EUROPEAN PATENT SPECIFICATION

(11) **EP 1 450 476 B1**
(45) Date of publication and mention of the grant of the patent: **29.09.2010**
(21) Application number: 04003476.1
(22) Date of filing: 17.02.2004
(51) Int. Cl.: H02M 5/458, H02J 9/06, H02M 1/10

(54) **Power converter circuit**
Stromrichterschaltung
Circuit convertisseur de puissance

(30) Priority: 18.02.2003 JP 2003039058; 19.06.2003 JP 2003174882
(43) Date of publication of application: 25.08.2004
(73) Proprietor: Fuji Electric Systems Co., Ltd., Tokyo 141-0032 (JP)
(72) Inventor: Okuma, Yasuhiro, 1-11-2 Osaki Shingawa-ku Tokyo 141-0032 (JP)
(74) Representative: MERH-IP Matias Erny Reichl Hoffmann

(56) References cited:
- WO-A-03/103126
- GB-A- 1 516 693
- US-A- 4 516 665
- US-A- 4 656 571
- US-A- 5 126 585
- US-A1- 2001 026 460
- US-B1- 6 271 633
- PATENT ABSTRACTS OF JAPAN vol. 2000, no. 12, 3 January 2001 (2001-01-03) & JP 2000 262070 A (SANKEN ELECTRIC CO LTD), 22 September 2000 (2000-09-22)
- PINHEIRO H ET AL: "SPACE VECTOR MODULATION METHOD FOR SINGLE PHASE ON-LIN THREE-LEG UPS" INTELEC 2000. 22ND. INTERNATIONAL TELECOMMUNICATIONS ENERGY CONFERENCE. PHOENIX, AZ, SEPT. 10 - 14, 2000, INTELEC. INTERNATIONAL TELECOMMUNICATIONS ENERGY CONFERENCE, NEW YORK, NY: IEEE, US, vol. CONF. 22, 10 September 2000 (2000-09-10), pages 679-686, XP000968753 ISBN: 0-7803-6408-2
- PATENT ABSTRACTS OF JAPAN vol. 2002, no. 11, 6 November 2002 (2002-11-06) -& JP 2002 199620 A (FUJI ELECTRIC CO LTD), 12 July 2002 (2002-07-12)
- PATENT ABSTRACTS OF JAPAN vol. 1996, no. 04, 30 April 1996 (1996-04-30) -& JP 7 337036 A (SANKEN ELECTRIC CO LTD; others: 01), 22 December 1995 (1995-12-22)
- GUI-JIA SU ET AL: "A novel topology for single phase UPS systems" INDUSTRY APPLICATIONS CONFERENCE, 1997. THIRTY-SECOND IAS ANNUAL MEETING, IAS '97., CONFERENCE RECORD OF THE 1997 IEEE NEW ORLEANS, LA, USA 5-9 OCT. 1997, NEW YORK, NY, USA,IEEE, US, 5 October 1997 (1997-10-05), pages 1376-1382, XP010248506 ISBN: 0-7803-4067-1
- PATENT ABSTRACTS OF JAPAN vol. 1998, no. 06, 30 April 1998 (1998-04-30) -& JP 10 042559 A (FUJI ELECTRIC CO LTD), 13 February 1998 (1998-02-13)
- KATSUYA H ET AL: "DEVELOPMENT OF UPS USING NEW TYPE OF CIRCUITS" PROCEEDINGS OF THE INTERNATIONAL TELECOMMUNICATIONS CONFERENCE (INTELEC). VANCOUVER, OCT. 30 - NOV. 3, 1994, NEW YORK, IEEE, US, vol. CONF. 16, 30 October 1994 (1994-10-30), pages 635-642, XP000623393 ISBN: 0-7803-2035-2

## Description

The present invention relates to an electric power converting device characterized by a main circuit arrangement for supplying a stabilized voltage from an alternating-current (ac) power source to a load.

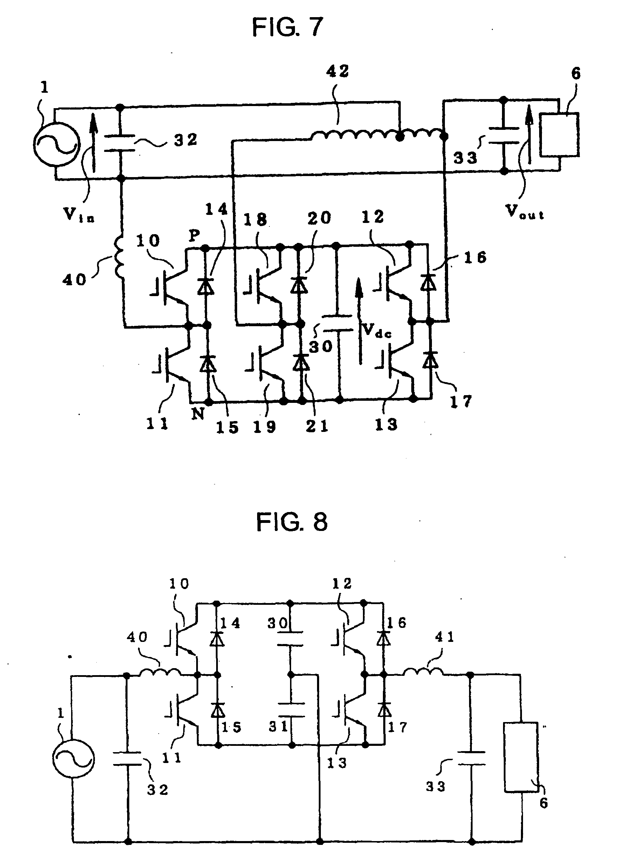

Figure 8 is a circuit diagram showing a conventional electric power converting device for once converting ac electric power to direct-current (dc) electric power and further converting the dc electric power to ac electric power.

In Fig. 8, to one end of an ac power source 1, a series circuit of semiconductor switching elements 10 and 11 is connected through a reactor 40. To the semiconductor switching elements 10 and 11, diodes 14 and 15 form an inverse-parallel (antiparallel) connection, respectively.

The semiconductor switching elements 10 and 11 are PWM (Pulse Width Modulation) controlled to operate as a rectifier circuit together with the diodes 14 and 15 to carry out a controlling and converting operation while storing energy in capacitors 30 and 31 connected in series so that the voltage across the capacitors 30 and 31 becomes a specified dc voltage.

Moreover, to the series circuit of the capacitors 30 and 31, a series circuit of semiconductor switching elements 12 and 13 are connected in parallel. To the semiconductor switching elements 12 and 13, diodes 16 and 17 are in an inverse-parallel connection, respectively. Here, by operating the semiconductor switching elements 12 and 13 as an inverter by the PWM control, a stabilized arbitrary ac voltage is generated from a smoothed dc voltage. The ac voltage is supplied to a load 6.

A capacitor 32 connected across the ac power source 1 is a filter capacitor. A reactor 41 and a capacitor 33 connected to the input side of the load 6 form an LC filter.

A circuit similar to that of the prior art shown in Fig. 8 is described in "Power Electronics Guidebook", Supplementary Volume of "OHM" Magazine, November 1999 issue, page 85, OHM-sha [1].

In the prior art shown in Fig. 8, a circuit in a so-called double converter arrangement is formed which once converts an ac power source voltage to a dc voltage before converting the dc voltage to an ac voltage again.

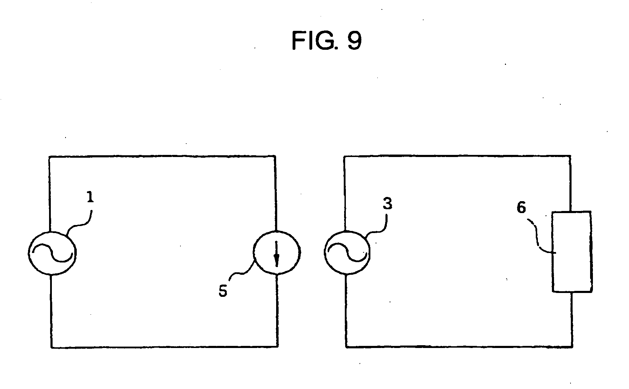

Figure 9 is a view for explaining the operating principle of the circuit in Fig. 8. In the circuit in Fig. 8, a converter, made up of the semiconductor switching elements 10 and 11 and the diodes 14 and 15 on the ac power source side, operates as a rectifier circuit. Therefore, the rectifier circuit, as shown in Fig. 9, can be regarded as a parallel current source 5 through which total energy required for the load 6 passes.

Moreover, a converter, made up of the semiconductor switching elements 12 and 13 and the diodes 16 and 17 on the load side in Fig. 8, operates as a so-called inverter to supply a specified voltage to the load 6. Therefore, the converter, as shown in Fig. 9, can be regarded as a parallel voltage source 3 through which the whole energy required for the load 6 passes.

Here, the capacitors 30 and 31 in Fig. 8 are connected to the output side of the rectifier circuit, that is, the input side of the inverter, to act as a power source of the inverter.

In an electric power converting device of a double converter system as shown in Fig. 8, all of energy supplied to the load 6 passes through both of the converters, that on the ac power source side and that on the load side. This causes the total loss to which each of the converters contributes to become large. Thus, there has been a problem of reducing conversion efficiency to cause increase in running cost.

Furthermore, both the rectifier circuit and the inverter operate as half bridges to cause a voltage about two times the ac power source voltage to be applied to the elements, which requires elements used to be ones with a high breakdown voltage. This has been a cause of further increasing cost.

Thus, the invention was made to change the conventional double converter to form a full bridge and change the way of connection to the ac power source 1 and the load 6. This made the converter on the load side operate as a series converter so as to form a so-called series-parallel converting device such that, when the voltage of the ac power source 1 is changed, the series converter compensates the change in voltage and only the amount of energy necessary for the compensation is compensated by the parallel converter on the ac power source side.

An electric power converting device according to the pre-characterizing portion of claim 1 is known from US 2001/0026460 A1.

The document JP 2002-199620 A discloses a UPS device comprising a parallel connection of half-bridge circuits and a DC link capacitor. Each of the half-bridge circuits includes a series connection of two switching elements with diodes in inverse-parallel connection. In this prior art separate parts of the circuit form a rectifier for charging the DC link capacitor and an inverter for discharging the DC link capacitor, respectively. A charging/discharging circuit is connected in parallel to the DC link capacitor to load charging means when the AC power source operates normally, and to fed energy from the charging means to the DC link capacitor when the AC power source does not operate normally.

The document Pinheiro H et al: "SPACE VECTOR MODULATION METHOD FOR SINGLE PHASE ON-LIN THREE-LEG UPS", INTELEC 2000, Phoenix, AZ, Sept. 10-14, 2000, International Telecommunications Energy Storage Conference, New York, NY, IEEE, US, Conf. 22, 10 September 2000, pages 679-686, XP000968753 ISBN: 0-7803-6408-2 discloses a UPS device having three half-bridge legs connected in parallel with a backup battery. The center node of the first half-bridge is connected via a first semiconductor switch and a first reactor to one end of an AC power source. The center node of the third half-bridge is connected via a second semiconductor switch and a second reactor to one end of a load. The center node of the second half-bridge is connected to the other ends of the AC power source and the load. The one end of the AC power source and the one end of the load are connected via a third semiconductor switch. A capacitor is connected to in parallel to the load

Accordingly, the problem to be solved by the invention is to provide an electric power converting device which can cut down running cost with a high conversion efficiency and which operates a first and second switching element series circuits at failure of the ac power source to thereby make it possible to continuously supply energy to a load.

Another problem to be solved by the invention is to provide an electric power converting device which can supply a constant voltage to a load while suppressing voltage variation in an ac power source.

Still another problem to be solved by the invention is to provide an electric power converting device that allows reducing the breakdown voltage of circuit elements used such as semiconductor switching elements to permit cost reduction.

A further problem to be solved by the invention is to provide an electric power converting device which can comply with a plurality kinds of ac power source voltages without changing the circuit arrangement or components.

These objects are achieved by an electric power converting device as claimed in claim 1. Preferred embodiments of the invention are subject-matter of the dependent claims.

Preferred embodiments of the invention will be explained below with reference to and in order of the drawings, in which:
- Fig. 1: is a circuit diagram showing a first example of an electric power converting device;
- Fig. 2: a diagram for explaining the operating principle of the first example shown in Fig. 1;
- Fig. 3: is a waveform diagram of command values showing operations of the first example shown in Fig. 1;
- Fig. 4: is a circuit diagram showing a second example of an electric power converting device;
- Fig. 5: is a circuit diagram showing a third example of an electric power converting device;
- Fig. 6: is a circuit diagram showing a first embodiment of the invention;
- Fig. 7: is a circuit diagram showing a second embodiment of the invention;
- Fig. 8: is a circuit diagram showing prior art; and
- Fig. 9: is a diagram for explaining the operating principle of the prior art.

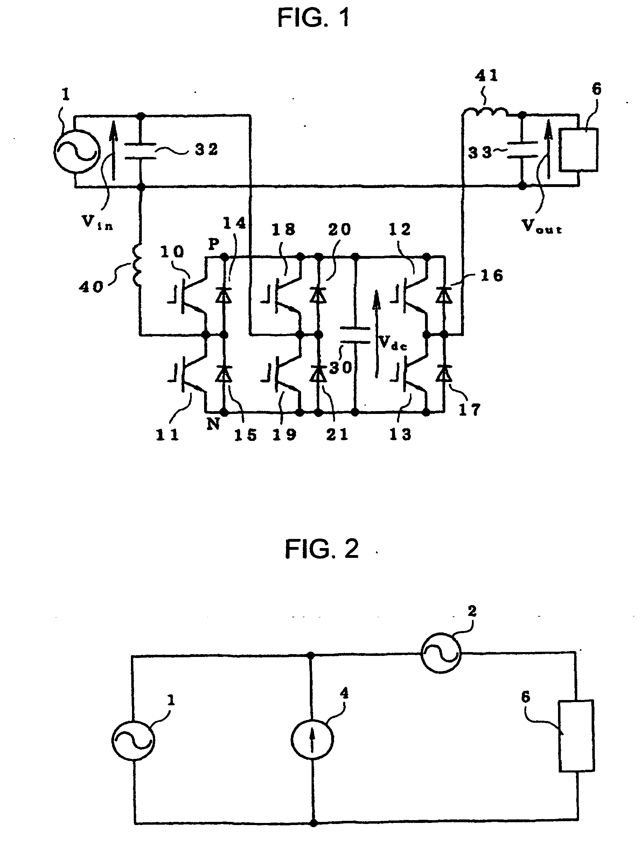

Fig. 1 is a circuit diagram of a first example of an electric power converting device.

In Fig. 1, a series circuit of a first and a second semiconductor switching element 10 and 11 such as IGBTs (Insulated Gate Bipolar Transistors) with a first and a second diode 14 and 15 in an inverse-parallel connection, respectively (referred to as a "first switching element series circuit"), a series circuit of a third and a fourth semiconductor switching element 18 and 19 with a third and a fourth diode 20 and 21 in an inverse-parallel connection, respectively (referred to as a "second switching element series circuit"), a series circuit of a fifth and a sixth semiconductor switching element 12 and 13 with a fifth and a sixth diode 16 and 17 in an inverse-parallel connection, respectively (referred to as a "third switching element series circuit"), and a first capacitor (electrolytic capacitor) 30 are connected in parallel to one another.

Moreover, a second capacitor 32 is connected in parallel to an ac power source 1 and a third capacitor 33 is connected in parallel to a load 6.

In addition, one end of the ac power source 1 is connected to one end of the load 6. The other end of the ac power source 1 is connected to a series connection point of the third and fourth semiconductor switching elements 18 and 19. Furthermore, the one end of the ac power source 1 is also connected to a series connection point of the first and second semiconductor switching elements 10 and 11 through a first reactor 40. The other end of the load 6 is connected to a series connection point of the fifth and sixth semiconductor switching elements 12 and 13 through a second reactor 41.

In the above circuit arrangement, when the first capacitor 30 is considered to be a power source of a converter formed with the semiconductor switching elements 18, 19, 12 and 13 and the diodes 20, 21, 16 and 17, the converter is connected in series between the ac power source 1 and the load 6. Hereinafter, this is referred to as a "series converter".

Moreover, the semiconductor switching elements 10, 11, 18 and 19 and diodes 14, 15, 20 and 21, to the output side of which the capacitor 30 is connected, are connected in parallel to the alternating current source 1. In the following, this is referred to as a parallel converter.

Fig. 2 is a view for explaining the operating principle of the example in Fig. 1.

A parallel compensating current source 4 in Fig. 2 represents the parallel converter, and a series compensating voltage source 2 represents the series converter. The series compensating voltage source 2 generates an arbitrary voltage, so that the sum of two voltage sources, namely the ac source 1 (ac voltage source) and the series compensating voltage source 2, is applied to the load 6. As a result, even in the case in which the voltage of the ac source 1 decreases, a variable voltage by the series compensating voltage source 2 is added to be applied to the load 6, by which variation in the power source voltage can be compensated to supply a constant voltage to the load 6.

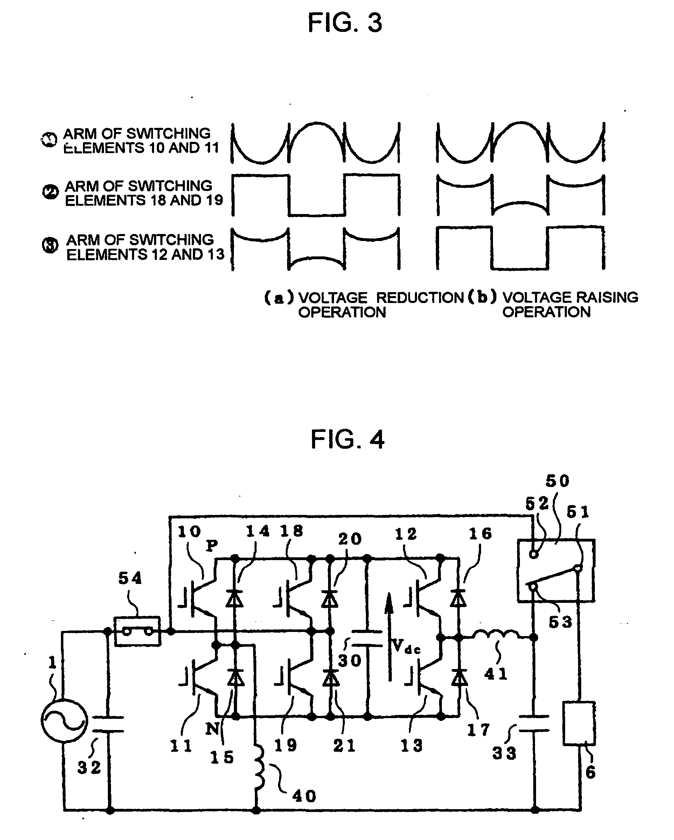

By using Fig. 3, additional explanations will be made about operations of the series converter and the parallel converter in Fig. 1.

Figure 3 shows output voltage waveforms of command values in each series arm of the semiconductor switching elements when the electric potential at the point N in the first to third switching element series circuits in Fig. 1 is taken as a reference.

First, an explanation will be made with reference to Fig. 3(a) about the case in which a voltage reduction operation is carried out to supply a constant voltage to the load 6 because the voltage of the ac power source 1 is higher than the desired output voltage. In this case, by carrying out switching of the semiconductor switching elements 18 and 19 in synchronism with the power source voltage, the output voltage of the series arm of the semiconductor switching elements becomes a rectangular wave as a command value (2).

At this time, for reducing the supply voltage to the load 6, control is carried out by the switching of the semiconductor switching elements 12 and 13 forming the series converter so that the output voltage waveform of the series arm of the semiconductor switching elements becomes a waveform of a command value (3). As a result, between the series connection point of the semiconductor switching elements 18 and 19 and the series connection point of the semiconductor switching elements 12 and 13, a voltage is outputted which is equivalent to a sinusoidal command value equivalent to the difference given as (the voltage of the command value (2) - the voltage of the command value (3)) in Fig. 3(a) (sinusoidal voltage in opposite phase to the power source voltage with a small amplitude).

The sinusoidal voltage corresponds to the output voltage of the series compensating voltage source 2 (series converter) in Fig. 2. The voltage is superposed on the power source voltage of the ac power source 1 to therefore realize a voltage reduction operation, by which a voltage lower than the power source voltage is applied to the load 6.

At the same time, as shown with the voltage waveform of a command value (1) in Fig. 3(a), the semiconductor switching elements 10 and 11, while generating an opposing voltage equivalent to the input voltage as a parallel converter, make the capacitor 30 charged and discharged between the ac power source 1 and the capacitor 30 so that the voltage across the capacitor 30 (Vdc in Fig. 1), fluctuated by the above-described voltage reduction operation, is kept constant. As a result, the parallel converter exchanges energy to be compensated with the series converter.

Moreover, in the case in which a voltage raising operation is carried out to supply a constant voltage to the load 6 despite the power source voltage being lower than the desired output voltage, by carrying out switching of the semiconductor switching elements 12 and 13 in synchronism with the power source voltage, the output voltage waveform of the series arm of the semiconductor switching elements becomes a rectangular wave shown as a command value (3) in Fig. 3(b).

Furthermore, by carrying out control so that the output voltage waveform of the series arm with the semiconductor switching elements 18 and 19 becomes a waveform of a command value (2), between the series connection point of the switching elements 18 and 19 and the series connection point of the switching elements 12 and 13, a voltage is outputted which is equivalent to a sinusoidal command value equivalent to the difference given as (the voltage of the command value (2) - the voltage of the command value (3)) in Fig. 3(b) (sinusoidal voltage in phase with the power source voltage with a small amplitude).

The sinusoidal voltage also is to correspond to an output voltage of the series compensating voltage source 2 (series converter) in Fig. 2. The voltage is superposed on the power source voltage of the ac power source 1 to therefore realize a voltage raising operation, by which a voltage higher than the power source voltage is applied to the load 6.

At the same time, as shown with the voltage waveform of a command value (1) in Fig. 3(b), the semiconductor switching elements 10 and 11, while generating an opposing voltage equivalent to the input voltage as a parallel converter, make the capacitor 30 charged and discharged between the ac power source 1 and the capacitor 30 so that the voltage across the capacitor 30 (Vdc in Fig. 1), fluctuated by the above-described voltage raising operation, is kept constant. As a result, the parallel converter exchanges energy to be compensated with the series converter.

Therefore, in any of the cases of the voltage raising operation and the voltage reduction operation, the energy supplied to the load 6 passes through only the series converter, and only the energy used for voltage compensation of the capacitor 30 passes through the parallel converter. This causes the loss of the parallel converter to be reduced in comparison with that of the conventional double converter system to make it possible to achieve enhanced efficiency.

Moreover, both of the parallel converter and the series converter are made to have full bridge arrangements. This allows breakdown voltages of semiconductor switching elements and the like to be lower compared with those in a conventional half-bridge arrangement, which permits cost reduction of the elements.

Fig. 4 is a circuit diagram showing a second example of an electric power converting device.

The difference from the first example in Fig. 1 is that a main switch 54 is added on the ac power source side and a changeover switch 50 is added on the load side.

Namely, between one end of the ac power source 1 and the series connection point of the semiconductor switching elements 18 and 19, the main switch 54 is connected. Moreover, the changeover switch 50 has a common terminal 51 and a first and a second switching contact 52 and 53, in which one end of the load 6 is connected to the common terminal 51 and, along with this, the first switching contact 52 is connected to the series connection point of the semiconductor switching elements 18 and 19 and the second switching contact 53 is connected to a connection point of the reactor 41 and the capacitor 33.

In such a circuit arrangement, under normal conditions, the main switch 54 is turned-on and the common terminal 51 of the changeover switch 50 is connected to the side of the second switching contact 53. In this case, the circuit arrangement is essentially the same as that in Fig. 1. Thus, like the circuit arrangement in Fig. 1, by the operations of the parallel converter and the series converter, a stabilized ac voltage is supplied to the load 6.

Now, suppose the case in which circuit elements such as the semiconductor switching elements and diodes cause a failure. In this case, the changeover switch 50 is switched to the side of the first switching contact 52 with the main switch 54 being left turned-on. This makes ac electric power supplied to the load 6 from the ac power source 1 through the main switch 54 and the changeover switch 50.

Moreover, when the voltage of the ac power source 1 exceeds the compensation range, the main switch 54 is turned-off and the changeover switch 50 is switched to the side of the second switching contact 53, by which the dc voltage of the capacitor 30 can be converted to an ac voltage by the semiconductor switching elements 10, 11, 12 and 13 to be supplied to the load 6.

The condition for switching the main switch 54 or the changeover switch 50 can be decided from the result of detection of the voltage Vdc across the capacitor 30 or the power source voltage.

The compensation time in a series-to-parallel converter when the voltage of the ac power source 1 exceeds the compensation range is short, namely about five minutes. Therefore, it is enough for the semiconductor switching elements and cooling devices to be so small as to bring about cost reduction.

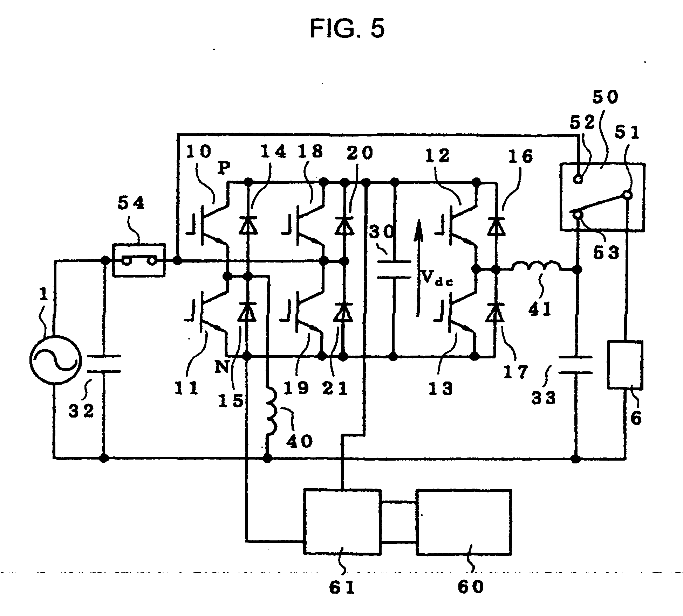

Figure 5 is a circuit diagram showing a third example of an electric power converting device.

This example is one in which an energy storing element 60 is connected in parallel between the point P and the point N in the first to third switching element series circuits through a charging and discharging unit 61.

Although Fig. 5 is shown in a form in which the charging and discharging unit 61 and the energy storing element 60 are added to the arrangement in Fig. 4, they can as well be added to the arrangement in Fig. 1.

The charging and discharging unit 61 is made up of semiconductor switches and magnetic parts such as reactors. As the energy storing element 60, a secondary cell such as a battery, an electromechanical energy storing device having a fly wheel and the like can be used.

In Fig. 5, under a normal condition of the ac power source 1, the main switch 54 and the changeover switch 50 are in the state shown in the figure. Thus, by the operations of the series converter and the parallel converter like those in the above explained Fig. 1, a stabilized ac voltage is supplied to the load 6.

Meanwhile, by the charging operation of the charging and discharging unit 61, energy is supplied from the ac power source 1 to be stored in the energy storing element 60.

When the ac power source 1 is under an abnormal condition, for example, when the ac power source 1 becomes unable to supply sufficient power to the load 6 due to a power failure, the stored energy in the energy storing element 60 is discharged through the charging and discharging unit 61 to charge the capacitor 30. In this case, since possible ways of detecting abnormality of the ac power source 1 and ways of controlling the charging and discharging unit 61 are well known, a detailed explanation thereof will be omitted here. Moreover, at this time, the main switch 54 is turned off and the changeover switch 50 is kept in the state shown in the figure.

With the above-described operation, when the ac power source 1 is under an abnormal condition, by the operation of the semiconductor switching elements 10, 11, 12 and 13 with the capacitor 30 taken as a power source, the electrical supply to the load 6 can be continued through the changeover switch 50.

In Fig. 5, at failures of the circuit elements such as the semiconductor switching elements or at an abnormal drop in the power source voltage, the operation becomes similar to that in the case shown in Fig. 4.

### FIRST Embodiment

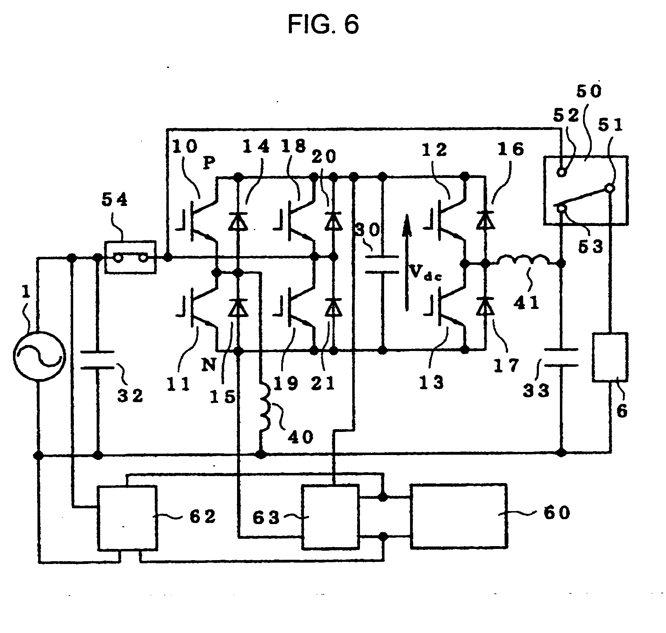

Figure 6 is a circuit diagram showing a first embodiment of the invention, which corresponds to the embodiment according to claim 1.

This embodiment is one in which the charging and discharging unit 61 is divided into a charging unit 62 and a discharging unit 63, and the charging unit 62 is connected across the alternating power source 1. Along with this, the discharging unit 63 is connected between the point P and the point N and the energy storing element 60 is connected in parallel to the charging unit 62 and the discharging unit 63. The charging unit 62, discharging unit 63 and the energy storing element 60 could be added to the arrangement in Fig. 1 as well.

The operation of the embodiment is that energy is stored in the energy storing element 60 by the charging unit 62 under a normal condition of the ac power source 1 and, under an abnormal condition of the ac power source 1, for example, at a power failure, the energy stored in the energy storing element 60 is supplied to the capacitor 30 by the discharging unit 63. With the capacitor 30 taken as a power source, while making the series converter and the parallel converter operate, a desired voltage is continuously supplied to the load 6.

The charging unit 62 and the discharging unit 63 are made up by a combination of semiconductor switches and magnetic parts, and for the energy storing element 60, similar ones to that in the example in Fig. 5 can be used.

### SECOND Embodiment

Figure 7 is a circuit diagram used to explain a third embodiment of the invention, which corresponds to the embodiment according to claim 3.

In the circuit arrangement shown in Fig. 1, for example, the second reactor 41 is changed to a tapped reactor 42, and one end on the load side of the reactor 42 is connected to the series connection point of the semiconductor switching elements 12 and 13. The other end of the reactor 42 is connected to the series connection point of the semiconductor switching elements 18 and 19, and the one end of the ac power source 1 that is not connected to the load 6 is connected to a tap terminal of the reactor 42.

According to such a circuit arrangement, the current can be reduced which passes through the series converter formed with the capacitor 30, semiconductor switching elements 18, 19, 12 and 13 and the like. This reduces the switching loss to permit further efficiency improvement together with loss reduction in the parallel converter.

The operation of the parallel converter is not changed. Thus, the explanation thereof will be omitted.

The tapped reactor 42 in Fig. 7 can be used as a substitution for the second reactor 41 in each of Fig. 4 to Fig. 6.

For example, this can be performed by removing the reactor 41 in Fig. 4, connecting one end of the tapped reactor 42 to the second switching contact 53 of the changeover switch 50 and the series connection point of the semiconductor switching element 12 and 13, connecting the other end of the tapped reactor 42 to the series connection point of the semiconductor switching elements 18 and 19, disconnecting one end of the main switch 54 from the series connection point of the semiconductor switching elements 18 and 19 and connecting the disconnected one end to the tap terminal of the tapped reactor 42.

Furthermore, to the above-described arrangement, can be combined with the charging unit 62, the discharging unit 63 and the energy storing element 60 shown in Fig. 6.

## Claims

1. An electric power converting device comprising:
a first switching element series circuit comprising a first and a second semiconductor switching element (10, 11) connected in series and each provided with a diode (14, 15) in inverse-parallel connection;
a second switching element series circuit comprising a third and a fourth semiconductor switching element (18, 19) connected in series and each provided with a diode (20, 21) in inverse-parallel connection;
a third switching element series circuit comprising a fifth and a sixth semiconductor switching element (12, 13) connected in series and each provided with a diode (16, 17) in inverse-parallel connection;
a first capacitor (30);
a second capacitor (32) connected in parallel to an ac power source (1);
a third capacitor (33) connected in parallel to a load (6);
a first reactor (40); and
a second reactor (41),
the first switching element series circuit, the second switching element series circuit, the third switching element series circuit, and the first capacitor (30) being connected in parallel to one another,
one end of the ac power source (1) and one end of the load (6) being connected to each other,
the junction between the first and the second semiconductor switching element (10, 11) in the first switching element series circuit being connected to the one end of the ac power source (1) through the first reactor (40),
the junction between the third and the fourth semiconductor switching element (18, 19) in the second switching element series circuit being connected to the other end of the ac power source (1),
the junction between the fifth and the sixth semiconductor switching element (12, 13) in the third switching element series circuit being connected to the other end of the load (6) through the second reactor (41),
the second switching element series circuit and the third switching element series circuit forming a series converter, adapted to compensate a change in voltage of the ac power source (1) to keep the supply voltage to the load (6) constant, and
the first switching element series circuit and the second switching element series circuit forming a parallel converter, adapted to compensate a change in voltage of the first capacitor (30) due to the compensating operation of the series converter by a charging and discharging operation between the ac power source (1) and the first capacitor (30),
the electric power converting device being **characterized by**
a charging unit (62) connected across the ac power source (1);
a discharging unit (63) connected across the switching element series circuits; and
an energy storing element (60) connected to the charging unit (62) and the discharging unit (63), wherein
when the power source voltage is under a normal condition, energy is stored in the energy storing element (60) through the charging unit (62), and
when the power source voltage is under an abnormal condition, the energy stored in the energy storing element (60) is supplied to the first capacitor (30) through the discharging unit (63).

2. The device as claimed in claim 1 further comprising:
a changeover switch (50) having a common terminal (51) and a first and a second switching contact (52, 53); and
a main switch (54),
the connection of one end of the second reactor (41) and the other end of the load (6) being disconnected and the common terminal (51) of the changeover switch (50) being connected to the other end of the load (6),
the second switching contact (53) of the changeover switch (50) being connected to one end of the second reactor (41),
the main switch (54) being connected between the junction between the third and fourth semiconductor switching elements (18, 19) in the second switching element series circuit and the other end of the ac power source (1), and
the first switching contact (52) of the changeover switch (50) being connected to the junction between the third and fourth semiconductor switching elements (18, 19) in the second switching element series circuit, wherein
when any of the switching element series circuits is under an abnormal condition, a voltage is supplied from the ac power source (1) to the load (6) through the main switch (54), and the first switching contact (52) and the common terminal (51) of the changeover switch (50), and
when the ac power source (1) is under an abnormal condition, the main switch (54) is turned-off and a voltage is supplied to the load (6) through the second switching contact (53) and the common terminal (51) of the changeover switch (50) with the first capacitor (30) taken as a power source.

3. The device as claimed in claim 2, **characterized by** comprising a tapped reactor as second reactor,
one end of the tapped reactor being connected to the second switching contact of the changeover switch and the junction between the fifth and sixth semiconductor switching elements in the third switching element series circuit,
the other end of the tapped reactor being connected to the junction between the third and fourth semiconductor switching elements in the second switching element series circuit, and
one end of the main switch being disconnected from the junction between the third and fourth semiconductor switching elements (18, 19) in the second switching element series circuit and instead connected to a tap terminal of the tapped reactor.

## Patentansprüche

1. Elektrische Leistungsumwandlungsvorrichtung, die aufweist:
eine erste Schaltelementreihenschaltung, die ein erstes und ein zweites Halbleiterschaltelement (10, 11) aufweist, die in Serie verbunden sind und jeweils mit einer Diode (14, 15) in invers-paralleler Verbindung versehen sind;
eine zweite Schaltelementreihenschaltung, die ein drittes und ein viertes Halbleiterschaltelement (18, 19) aufweist, die in Serie verbunden sind und jeweils mit einer Diode (20, 21) in invers-paralleler Verbindung versehen sind;
eine dritte Schaltelementreihenschaltung, die ein fünftes und ein sechstes Halbleiterschaltelement (12, 13) aufweist, die in Serie verbunden sind und jeweils mit einer Diode (16, 17) in invers-paralleler Verbindung versehen sind;
einen ersten Kondensator (30);
einen zweiten Kondensator (32), der parallel mit einer Wechselstrom(AC)-Stromquelle (1) verbunden ist;
einen dritten Kondensator (33), der parallel mit einer Last (6) verbunden ist;
einen ersten Reaktor (40); und
einen zweiten Reaktor (41),
wobei die erste Schaltelementreihenschaltung, die zweite Schaltelementreihenschaltung, die dritte Schaltelementreihenschaltung und der erste Kondensator (30) parallel miteinander verbunden sind,
ein Ende der Wechselstrom-Stromquelle (1) und ein Ende der Last (6) miteinander verbunden sind,
die Verbindung zwischen dem ersten und dem zweiten Halbleiterschaltelement (10, 11) in der ersten Schaltelementreihenschaltung mit dem einen Ende der Wechselstrom-Stromquelle (1) über den ersten Reaktor (40) verbunden ist,
die Verbindung zwischen dem dritten und dem vierten Halbleiterschaltelement (18, 19) in der zweiten Schaltelementreihenschaltung mit dem anderen Ende der Wechselstrom-Stromquelle (1) verbunden ist,
die Verbindung zwischen dem fünften und dem sechsten Halbleiterschaltelement (12, 13) in der dritten Schaltelementreihenschaltung mit dem anderen Ende der Last (6) über den zweiten Reaktor (41) verbunden ist,
die zweite Schaltelementreihenschaltung und die dritte Schaltelementreihenschaltung einen Serien-Konverter bilden, der ausgebildet ist, eine Änderung der Spannung der Wechselstrom-Stromquelle (1) zu kompensieren, um die Versorgungsspannung zu der Last (6) konstant zu halten, und
die erste Schaltelementreihenschaltung und die zweite Schaltelementreihenschaltung einen parallelen Konverter bilden, der ausgebildet ist, eine Änderung der Spannung des ersten Kondensators (30) zu kompensieren aufgrund der Kompensationsoperation des Serien-Konverters durch eine Laden- und Entladen-Operation zwischen der Wechselstrom-Stromquelle (1) und dem ersten Kondensator (30),
wobei die elektrische Leistungsumwandlungsvorrichtung **gekennzeichnet ist durch** eine Ladeeinheit (62), die über die Wechselstrom-Stromquelle (1) verbunden ist;
eine Entladeeinheit (63), die über die Schaltelementreihenschaltungen verbunden ist; und
ein Energiespeicherelement (60), das mit der Ladeeinheit (62) und der Entladeeinheit (63) verbunden ist, wobei,
wenn die Stromquellenspannung in einer normalen Bedingung ist, Energie in dem Energiespeicherelement (60) über die Ladeeinheit (62) gespeichert wird, und
wenn die Stromquellenspannung in einer anormalen Bedingung ist, die Energie, die in dem Energiespeicherelement (60) gespeichert ist, über die Entladeeinheit (63) an den ersten Kondensator geliefert wird.

2. Vorrichtung gemäß Anspruch 1, die weiter aufweist:
einen Wechselschalter (50) mit einem gemeinsamen Anschluss (51) und einem ersten und einem zweiten Schaltkontakt (52, 53); und
einen Hauptschalter (54),
wobei die Verbindung von einem Ende des zweiten Reaktors (41) und dem anderen Ende der Last (6) getrennt wird und der gemeinsame Anschluss (51) des Wechselschalters (50) mit dem anderen Ende der Last (6) verbunden wird,
der zweite Schaltkontakt (53) des Wechselschalters (50) mit einem Ende des zweiten Reaktors (41) verbunden wird,
der Hauptschalter (54) zwischen der Verbindung zwischen den dritten und vierten Halbleiterschaltelementen (18, 19) in der zweiten Schaltelementreihenschaltung und dem anderen Ende der Wechselstrom-Stromquelle (1) verbunden wird, und
der erste Schaltkontakt (52) des Wechselschalters (50) mit der Verbindung zwischen den dritten und vierten Halbleiterschaltelementen (18, 19) in der zweiten Schaltelementreihenschaltung verbunden wird, wobei
wenn eine der Schaltelementreihenschaltungen in einer anormalen Bedingung ist, eine Spannung von der Wechselstrom-Stromquelle (1) an die Last (6) geliefert wird über den Hauptschalter (54), und den ersten Schaltkontakt (52) und den gemeinsamen Anschluss (51) des Wechselschalters (50), und
wenn die Wechselstrom-Stromquelle (1) unter einer anormalen Bedingung ist, der Hauptschalter (54) abgeschaltet wird und eine Spannung an die Last (6) geliefert wird über den zweiten Schaltkontakt (53) und den gemeinsamen Anschluss (51) des Wechselschalters (50), wobei der erste Kondensator (30) als eine Stromquelle genommen wird.

3. Vorrichtung gemäß Anspruch 2, die **gekennzeichnet ist durch** Aufweisen eines angezapften Reaktors als zweiten Reaktor,
wobei ein Ende des angezapften Reaktors mit dem zweiten Schaltkontakt des Wechselschalters und der Verbindung zwischen den fünften und sechsten Halbleiterschaltelementen in der dritten Schaltelementreihenschaltung verbunden ist,
das andere Ende des angezapften Reaktors mit der Verbindung zwischen den dritten und vierten Halbleiterschaltelementen in der zweiten Schaltelementreihenschaltung verbunden ist, und
ein Ende des Hauptschalters von der Verbindung zwischen den dritten und vierten Halbleiterschaltelementen (18, 19) in der zweiten Schaltelementreihenschaltung getrennt ist und stattdessen mit einem Anzapfanschluss des angezapften Reaktors verbunden ist.

## Revendications

1. Dispositif électrique de conversion de puissance comprenant :
un premier circuit série d'éléments de commutation, comprenant un premier et un deuxième éléments (10, 11) de commutation à semiconducteur montés en série et chacun doté d'une diode (14) montée tête-bêche ;
un deuxième circuit série d'éléments de commutation, comprenant un troisième et un quatrième éléments (18, 19) de commutation à semiconducteur montés en série et chacun doté d'une diode (20, 21) montée tête-bêche ;
un troisième circuit d'éléments de commutation, comprenant un cinquième et un sixième éléments (12, 13) de commutation à semiconducteur montés en série et chacun doté d'une diode (16, 17) montée tête-bêche ;
un premier condensateur (30) ;
un deuxième condensateur (32) monté en parallèle à une source (1) de courant alternatif ;
un troisième condensateur (33) monté en parallèle à une charge (6) ;
une première réactance (40) ; et
une deuxième réactance (41) ;
le premier circuit d'éléments de commutation et le deuxième circuit d'éléments de commutation, le troisième circuit d'éléments de commutation, et le premier condensateur (30) étant montés en parallèle entre eux,
une extrémité de la source (1) de courant alternatif et une extrémité de la charge (6) étant reliées l'une à l'autre,
la jonction entre le premier et le deuxième élément (10, 11) de commutation à semiconducteur, dans le premier circuit série d'éléments de commutation, étant reliée à la une extrémité de la source (1) de courant alternatif, par l'intermédiaire de la première réactance (40) ;
la jonction entre le troisième et le quatrième élément (18, 19) de commutation à semiconducteur, du deuxième circuit série d'éléments de commutation, étant reliée à l'autre extrémité de la source (1) de courant alternatif,
la jonction entre le cinquième et le sixième élément (12, 13) de commutation à semiconducteur, du troisième circuit série d'éléments de commutation, étant reliée à l'autre extrémité de la charge (6), par l'intermédiaire de la deuxième réactance (41),
le deuxième circuit série d'éléments de commutation et le troisième circuit série d'éléments de commutation formant un convertisseur série conçu pour compenser une variation de tension de la source (1) de courant alternatif, pour maintenir constante la tension appliquée à la charge (6), et
le premier circuit série d'éléments de commutation et le deuxième circuit série d'éléments de commutation formant un convertisseur parallèle conçu pour compenser une variation de tension du premier condensateur (30) dûe à l'opération de compensation du convertisseur série, par une opération de charge et de décharge entre la source (1) de courant alternatif et le premier condensateur (30),
le dispositif électrique de conversion de puissance étant **caractérisé par** une unité (62) de chargement montée au borne de la source (1) de courant alternatif ;
une unité (63) de déchargement montée au borne des circuits série d'éléments de commutation ; et
un élément (60) d'emmagasinage d'énergie relié à l'unité (62) de chargement et à l'unité (63) de déchargement, dans lequel,
lorsque la tension de la source de courant est dans un état normal, de l'énergie est emmagasinée dans l'élément (60) d'emmagasinage d'énergie, par l'intermédiaire de l'unité (62) de chargement, et
lorsque la tension de la source de courant est dans un état anormal, l'énergie emmagasinée dans l'élément (60) d'emmagasinage d'énergie est fournie au premier condensateur (30), par l'intermédiaire de l'unité (63) de déchargement.

2. Dispositif suivant la revendication 1, comprenant en outre :
un commutateur (50) inverseur ayant une borne (51) commune et un premier et un deuxième contact (52, 53) de commutation ; et
un commutateur (54) principal,
la connexion d'une extrémité de la deuxième réactance (41) et de l'autre extrémité de la charge (6) étant déconnectée et la borne (51) commune du commutateur (50) inverseur étant connectée à l'autre extrémité de la charge (6),
le deuxième contact (53) de commutation du commutateur (50) inverseur étant connecté à la une extrémité de la deuxième réactance (41),
le commutateur (54) principal étant monté entre la jonction comprise entre les premier et quatrième éléments (18, 19) de commutation à semiconducteur du deuxième circuit série d'éléments de commutation et l'autre extrémité de la source (1) de courant alternatif, et
le premier contact (52) de commutation du commutateur (50) inverseur étant connecté à la jonction comprise entre le premier et le quatrième élément (18, 19) de commutation à semiconducteur du deuxième circuit série d'éléments de commutation, dans lequel
lorsque l'un quelconque des circuits série d'éléments de commutation est dans son état anormal, une tension est appliquée par la source (1) de courant alternatif à la charge (6), par l'intermédiaire du commutateur (54) principal et du premier contact (52) de commutation et de la borne (51) commune du commutateur (50) inverseur, et
lorsque la source (1) de courant alternatif est dans un état normal, le commutateur (54) principal est ouvert et une tension est appliquée à la charge (6), par l'intermédiaire du deuxième contact (53) de commutation et de la borne (51) commune du commutateur (50) inverseur, le premier condensateur (30) étant pris comme source de courant.

3. Dispositif suivant la revendication 2,
**caractérisé en ce qu'**il comprend une réactance à prise comme deuxième réactance,
l'une des extrémités de la réactance à prise étant connectée au deuxième contact de commutation du commutateur inverseur et à la jonction comprise entre le cinquième et le sixième élément de commutation à semiconducteur du troisième circuit série d'éléments de commutation,
l'autre extrémité de la réactance à prise étant connectée à la jonction comprise entre le troisième et le quatrième élément de commutation à semiconducteur du deuxième circuit série d'éléments de commutation, et
l'une des extrémités du commutateur principal étant déconnectée de la jonction entre le troisième et le quatrième élément (18, 19) de commutation à semiconducteur du deuxième circuit série d'éléments de commutation et au lieu de cela, reliée à une borne de prise de la réactance à prise.
